# DEMANDE DE BREVET EUROPEEN

(11) **EP 0 850 823 A1**
(43) Date de publication de la demande: **01.07.1998**
(21) Numéro de dépôt: 97403083.5
(22) Date de dépôt: 19.12.1997
(51) Int. Cl.: B62J 27/00

(54) **Dispositif de sécurité pour véhicule à deux roues, notamment du type scooter et véhicule ainsi équipé**

(30) Priorité: 23.12.1996 FR 9615834; 23.12.1996 FR 9615835
(71) Demandeur: Mourer, Hubert, 75015 Paris (FR)
(72) Inventeur: Mourer, Hubert, 75015 Paris (FR)

(57) **Abrégé**

La présente invention concerne un dispositif de sécurité pour véhicule à deux roues, notamment du type scooter, comprenant un châssis (2) formé d'une part, d'une tubulure frontale (3) de laquelle est issue une fourche (4) supportant une roue avant (5), reliée à un guidon (6) et d'autre part, d'une tubulure centrale (7) prolongeant la tubulure frontale (3) et s'étendant vers l'arrière par une tubulure (8) supportant un bloc moteur en liaison mécanique avec une roue arrière (9) et un siège (10), ledit châssis (2) étant enveloppé pour tout ou partie par un carénage (11) libérant un espace central (A) délimité par la tubulure frontale (3), la tubulure centrale (7) et la tubulure arrière (8) supportant le siège (10), de manière à permettre au conducteur de prendre place sur le véhicule par accès latéral sans enjambement, ledit espace central (A) étant susceptible d'être occupé au moins partiellement par un élément de séparation escamotable, caractérisé en ce que l'escamotage (I) ou la mise en place (II) de l'élément de séparation (12) s'effectue par l'intermédiaire de moyens de commande (13) actionnables automatiquement par le propre poids (P) du conducteur, de manière à assurer la mise en place dudit élément (12) entre les jambes du conducteur lorsque celui-ci prend place sur le siège (10) et son escamotage lorsqu'il le quitte.

## Description

La présente invention concerne un dispositif de sécurité pour véhicule à deux roues, notamment du type scooter.

La caractéristique fondamentale de ce véhicule, à la base de sa conception, réside dans le fait qu'un espace central est réservé aux jambes du conducteur entre une partie avant et le siège, de manière à ce que le conducteur puisse prendre place sur le véhicule sans aucune entrave pour ses jambes qui peuvent bénéficier ainsi d'un accès latéral plutôt que de devoir enfourcher le véhicule pour y prendre place à califourchon.

C'est la différence fondamentale par exemple avec une motocyclette.

Cette caractéristique qui vient d'être énoncée a non seulement pour objectif de créer un véhicule d'aspect particulier, mais avait surtout pour avantage d'offrir aux femmes un moyen de locomotion plus compatible avec leurs vêtements.

Néanmoins, il a toujours été considéré que ce type de véhicule est statistiquement dangereux et que les chutes sont fréquentes.

Cela est dû en partie au fait que le conducteur ou la conductrice est, du fait de l'espace central précité, peu en contact avec le véhicule. En effet, les trois seuls points de contact avec celui-ci se trouvent au niveau de la selle, des pieds et des mains sur le guidon.

En fait, le conducteur est relativement libre sur le véhicule à l'inverse d'un conducteur de moto qui fait réellement corps avec sa machine dont on a une bien meilleure maîtrise en cas de difficulté ou face à un obstacle.

La présente invention a pour objet un véhicule à deux roues, notamment du type scooter, comportant un dispositif de sécurité de nature à résoudre l'inconvénient précité, sans pour autant remettre en question la caractéristique essentielle de ce type de véhicule, c'est-à-dire permettre un accès latéral des jambes, particulièrement apprécié par les femmes.

A cet effet, l'invention concerne un dispositif de sécurité pour véhicule à deux roues, notamment du type scooter, comprenant un châssis formé, d'une part, d'une tubulure frontale de laquelle est issue une fourche supportant une roue avant, reliée à un guidon et, d'autre part, d'une tubulure centrale prolongeant la tubulure frontale et s'étendant vers l'arrière par une tubulure supportant un bloc moteur en liaison mécanique avec une roue arrière et un siège, ledit châssis étant enveloppé pour tout ou partie par un carénage libérant un espace central délimité par la tubulure frontale, la tubulure centrale et la tubulure arrière supportant le siège, de manière à permettre au conducteur de prendre place sur le véhicule par accès latéral sans enjambement, ledit espace central étant susceptible d'être occupé au moins partiellement par un élément de séparation escamotable, caractérisé en ce que l'escamotage ou la mise en place de l'élément de séparation s'effectue par l'intermédiaire de moyens de commande actionnables automatiquement par le propre poids du conducteur, de manière à assurer la mise en place dudit élément entre les jambes du conducteur lorsque celui-ci prend place sur le siège et son escamotage lorsqu'il le quitte.

La présente invention concerne également les caractéristiques qui ressortiront au cours de la description qui va suivre et qui devront être considérées isolément ou selon toutes leurs combinaisons techniques possibles.

Cette description, donnée à titre d'exemple non limitatif, fera mieux comprendre comment l'invention peut être réalisée, en référence aux dessins annexés sur lesquels :
- la figure 1 est une vue latérale d'un véhicule à deux roues, en l'occurrence un scooter, équipé d'un dispositif de sécurité selon l'invention ;
- les figures 2 et 3 sont des vues partielles agrandies de la figure 1 montrant respectivement le dispositif de sécurité en position inactive et en position active ;

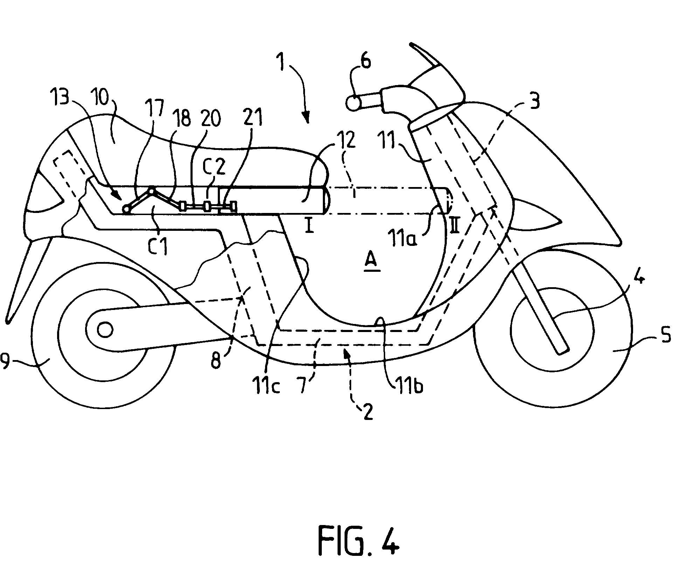

- la figure 4 est une vue latérale d'un véhicule à deux roues, en l'occurrence un scooter, équipé d'un dispositif de sécurité selon l'invention selon une variante de réalisation ;
- la figure 5 est une vue en perspective du dispositif de sécurité selon la figure 4 en position inactive ;
- la figure 6 est une vue latérale d'un dispositif de sécurité selon les figures 4 et 5 en position active ;
- la figure 7 est une vue de détail d'une des articulations du dispositif de sécurité selon les figures 4 à 6.

Selon un exemple non limitatif, le véhicule à deux roues qui sera décrit ci-après est un scooter mais, bien entendu, l'invention est applicable à tout autre type de véhicule à deux roues pourvu qu'initialement, son cadre soit dépourvu d'une barre horizontale.

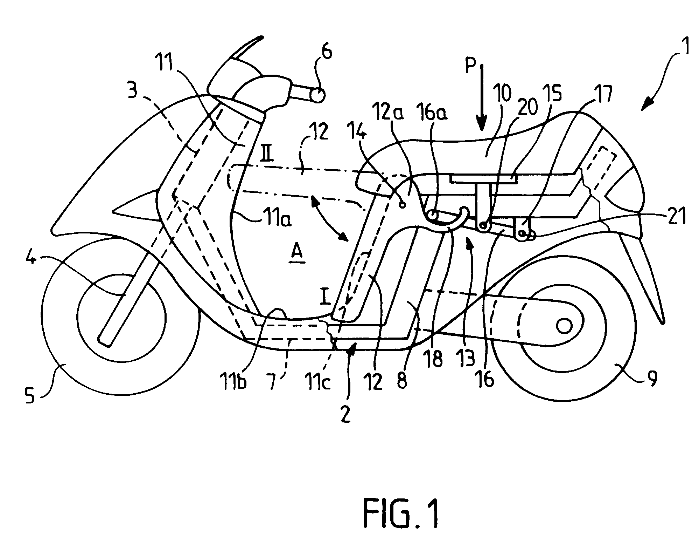

Le scooter 1 désigné dans son ensemble sur la figure 1, comprend un châssis 2 formé, d'une part, d'une tubulure frontale 3 de laquelle est issue une fourche 4 supportant une roue avant 5, reliée à un guidon 6. Le châssis 2 comprend, d'autre part, une tubulure centrale 7 prolongeant la tubulure frontale 3 et s'étendant vers l'arrière par une tubulure 8 supportant un bloc moteur en liaison mécanique avec une roue arrière 9 et un siège 10.

Ledit châssis 2 est enveloppé pour tout ou partie par un carénage 11 libérant un espace central A délimité par la tubulure frontale 3, la tubulure centrale 7 et la tubulure arrière 8 supportant le siège 10.

Comme déjà évoqué précédemment, une telle conception est apte à permettre à un conducteur ou une conductrice de prendre place sur le scooter par accès latéral sans devoir enjamber le siège.

Selon l'invention, l'espace central est susceptible d'être occupé au moins partiellement par un élément de séparation escamotable 12 s'étendant longitudinalement de manière sensiblement horizontale entre une partie frontale 11a du carénage 11 et une partie arrière llc de celui-ci au niveau du siège 10.

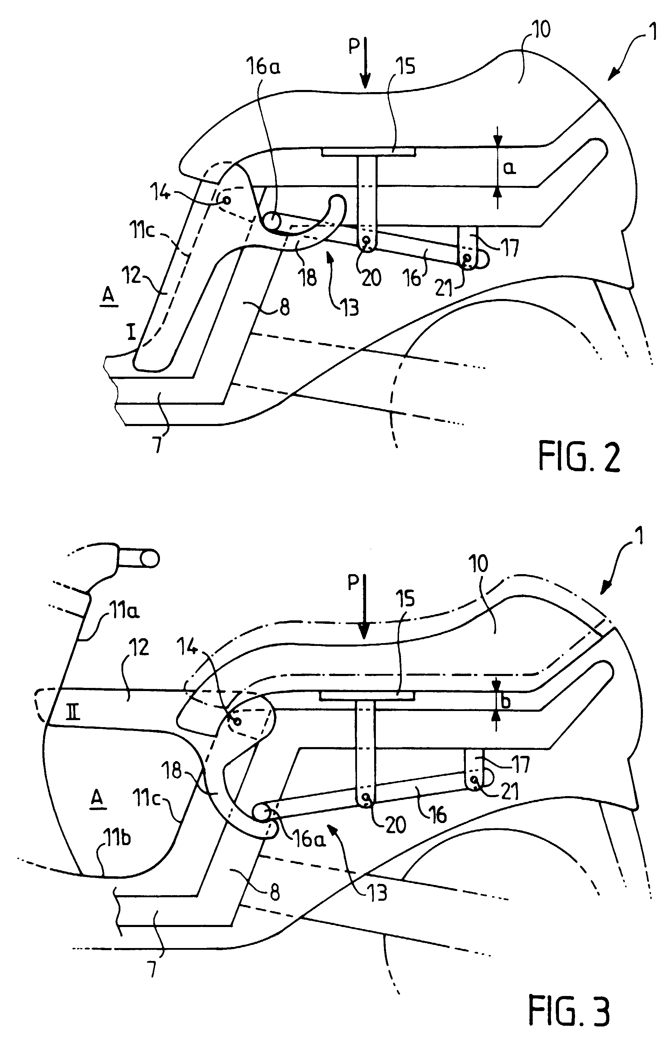

Comme le montrent particulièrement bien les figures 2 et 3, l'escamotage selon la position I (figure 2) ou la mise en place de l'élément de séparation 12 selon la position II (figure 3) s'effectue par l'intermédiaire de moyens de commande 13 actionnables automatiquement par le propre poids P du conducteur, lorsque celui-ci prend place sur le siège 10 et son escamotage lorsqu'il le quitte.

Toujours selon le présent exemple de réalisation, non limitatif, l'élément de séparation 12 est constitué par une barre droite montée oscillante par une des ses extrémités 12a sur un axe de rotation 14, solidaire d'une partie supérieure de la tubulure arrière 8 sous le siège 10, et susceptible d'osciller entre une position I sensiblement verticale d'escamotage et une position II sensiblement horizontale opérationnelle.

Selon une variante de réalisation non représentée, la barre droite 12 constituant l'élément de séparation s'étend à partir d'une génératrice inférieure, par une cloison occupant la quasi totalité de l'espace central A pour former un élément de carénage escamotable coopérant en fermeture avec le carénage fixe 11.

Dans ce cas, l'espace central A fermé est délimité par la barre droite 12 à sa partie supérieure, une zone frontale 11a du carénage 11, une partie 11b du carénage 11, formant repose-pied, une zone arrière llc du même carénage 11.

Une telle conception aurait pour effet, non seulement d'apporter un élément de sécurité indispensable à ce type de véhicule, mais également de présenter sur le marché un scooter d'aspect nouveau et original.

Les moyens de commande 13 de l'élément de séparation 12 sont actionnables par le propre poids P du conducteur par l'intermédiaire d'une platine 15 fixée sur le siège 10 et en liaison 20 avec une biellette 16 à action verticale, articulée d'une part sur une partie fixe 17 de la tubulure arrière 8 du châssis 2 et dont l'extrémité libre 16a est en appui sur un bras de manoeuvre 18 s'étendant librement à partir de l'élément de séparation 12 à proximité de sa zone d'articulation 14 sur le châssis 2 d'autre part.

De cette manière, lorsque le poids P du conducteur exerce une action verticale sur le siège 10, cela provoque un débattement angulaire de la biellette autour de son axe fixe 17 selon une valeur prédéterminée et correspondant à un débattement angulaire de l'élément de séparation 12 tel qu'il amène celui-ci dans une position 2 sensiblement horizontale.

Ce débattement angulaire correspond à la différence entre l'écartement de valeur « a » existant entre le siège 10 et la partie arrière 8 du châssis 2, lorsque ledit siège est inoccupé et la valeur de l'écartement « b » des mêmes éléments lorsque le siège est occupé et qu'un poids P est exercé sur celui-ci.

Préférentiellement, de manière à assurer une meilleure stabilité des moyens de commande, la liaison entre la platine 15 du siège 10 et la biellette 16 est effectuée par l'intermédiaire de deux bras parallèles et verticaux articulés sur deux bras parallèles correspondants de la biellette 16 formant un cadre quadrangulaire avec son axe d'articulation 21 sur le châssis 2 et son extrémité libre 16a en forme de barre, en appui sur le bras de manoeuvre 18 de l'élément de séparation 12.

Selon une autre caractéristique de l'invention, l'élément de séparation 12 comporte des moyens de verrouillage en position (non représentés).

Ces derniers moyens peuvent être actionnés automatiquement ou manuellement.

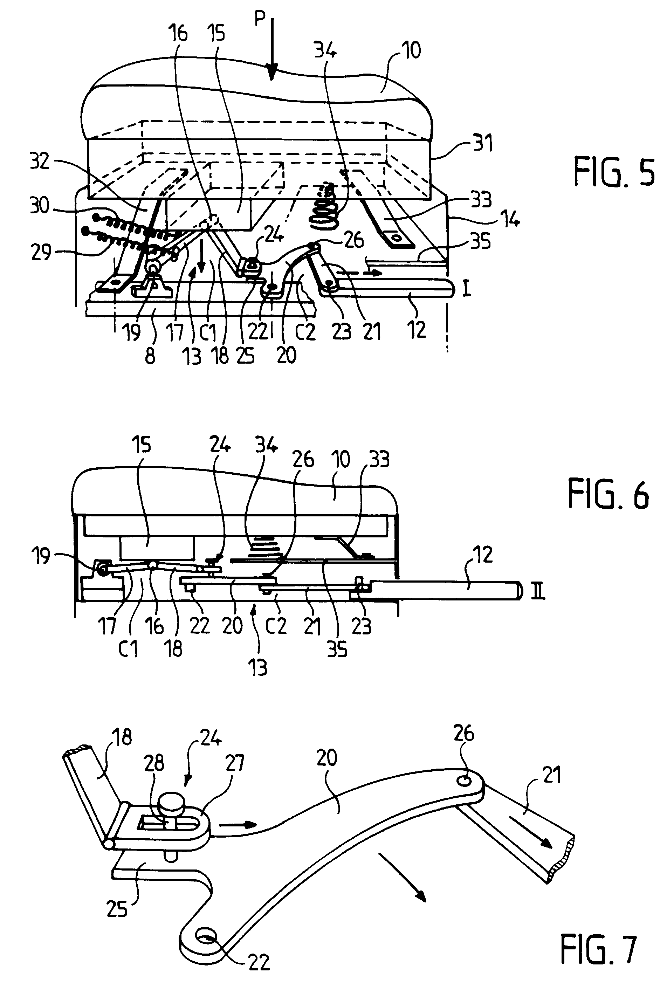

Selon une autre variante de réalisation et comme le montrent particulièrement bien les figures l'escamotage selon la position I (figure 5) ou la mise en place de l'élément de séparation 12 selon la position II (figure 6) s'effectue par l'intermédiaire de moyens de commande 13 actionnables automatiquement par le propre poids P du conducteur, lorsque celui-ci prend place sur le siège 10 et son escamotage lorsqu'il le quitte comme précédemment, mais la différence réside dans le fait que l'élément de séparation 12 est constitué par une barre droite montée coulissante au travers d'un caisson 14 situé sous le siège 10 et renfermant les moyens de commande 13 et susceptibles d'entraîner l'élément de séparation 12 selon un déplacement longitudinal et horizontal entre une position I d'entrée dite d'escamotage et une position II sortie dite opérationnelle.

Selon ce même exemple, les moyens de commande de l'élément de séparation 12 sont actionnables par le propre poids P du conducteur par l'intermédiaire d'une platine 15 disposée sous le siège 10 et sur laquelle vient en appui une articulation 16 à partir de laquelle s'étendent deux biellettes 17 et 18 formant un premier compas vertical C1, dont chacune des extrémités libres est reliée pour l'une 17 à une articulation fixe 19 disposée sur la tubulure arrière 8 du châssis 2 sous le siège 10, et pour l'autre 18 à un second compas horizontal C2 formé également par deux biellettes 20, 21 dont chacune des extrémités libres est reliée pour l'une 20 à une seconde articulation fixe 22 disposée dans l'axe de la première 19 sur la tubulure arrière 8 du châssis 2 et pour l'autre à une articulation mobile 23 reliée à l'une des extrémités de l'élément de séparation 12 à actionner.

La liaison entre l'une des bielles 18 du premier compas C1 et la bielle correspondante 20 du second compas C2 est réalisée par l'intermédiaire d'une articulation mobile 24 ménagée entre l'extrémité de l'une 18 et une patte 25 de l'autre 20 qui est déportée par rapport à son articulation fixe 22.

De cette manière, une pression verticale P sur le premier compas C1 provoque l'écartement de ces biellettes 17 et 18 et conséquemment, l'ouverture de celles 20, 21 constituant le second compas C2. Il s'ensuit de cette géométrie variable des compas C1, C2, une extension longitudinale vers une position active de l'élément de séparation 12 disposé à l'extrémité libre du second compas C2.

L'articulation entre elles des bielles 20, 21 du compas C2 s'effectue par l'intermédiaire d'une articulation mobile 26.

Selon une autre caractéristique de l'invention, l'articulation mobile 24 interposée entre l'extrémité d'une bielle 18 du premier compas C1 et la patte déportée 25 de la bielle correspondante 20 du second compas C2, est constituée par un anneau 27 articulé lui-même à l'extrémité libre de la bielle 18 du premier compas C1 et qui est traversé librement par un pion 28 solidaire de la patte déportée 25 de la bielle 21 du second compas C2, cette liaison s'effectuant avec un jeu prédéterminé apte à permettre au pion 28 de décrire un arc de cercle dans l'anneau 27, en cours de débattement angulaire dudit second compas C2.

Selon une autre caractéristique de l'invention, des moyens de rappel élastiques 29, 30 sont interposés entre la bielle 17 du premier compas vertical C1 et la paroi arrière d'un caisson récepteur fixe 14 renfermant l'ensemble du dispositif et par rapport auquel une embase correspondante 31 du siège 10 est montée de manière télescopique, pour action sur le premier compas vertical C1 par l'intermédiaire de la platine 15.

Par ailleurs, des moyens de rappel élastiques 32, 33, 34 sont interposés entre une partie inférieure fixe 35 du caisson récepteur 14 et le dessous du siège 10.

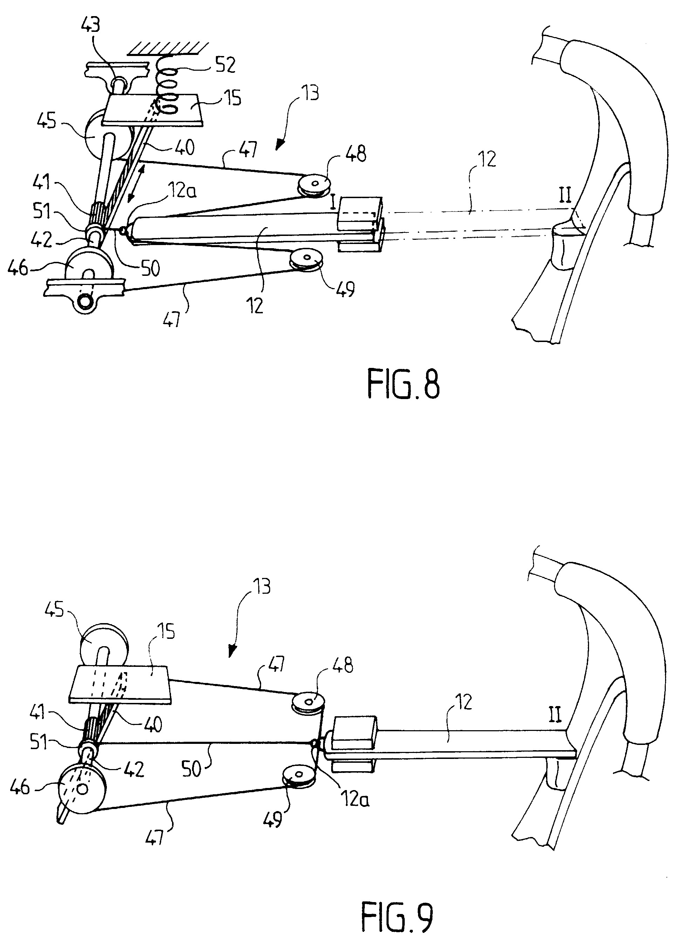

Selon une autre variante de réalisation représentée sur les figures 8 et 9, l'escamotage de l'élément de séparation 12 selon la position I (figure 8) ou sa mise en place selon la position II (figure 9) s'effectue par l'intermédiaire de moyens de commande 13, actionnables par le propre poids P du conducteur par l'intermédiaire d'une platine 15 disposée sous e siège 10, selon le même principe déjà évoqué dans les exemples précédents.

Le présent exemple diffère essentiellement des précédents en ce que la platine 15 vient en appui sur l'extrémité libre d'une crémaillère rectiligne 40 en prise permanente avec un pignon denté 41 disposé solidairement sur un arbre transversal 42 monté rotatif entre deux paliers latéraux 43 et 44.

Ce même arbre transversal 42 supporte de manière solidaire deux poulies arrière latérales 45 et 46, sur lesquelles sont susceptibles de s'enrouler les extrémités d'un câble principal 47.

Ce câble contourne deux poulies fixes de renvoi 48 et 49 disposées vers l'avant et est relié, d'une part, par son centre avec une extrémité arrière 12a de l'élément de séparation 12 et, d'autre part, à un second câble 50 dit de rappel, en liaison avec une poulie centrale 51 solidaire de l'arbre 42.

De cette manière, lors d'un actionnement en descente de la crémaillère 40 provoqué par le poids P du conducteur, on initie l'enroulement des extrémités du câble principal 47 sur les poulies arrière latérales 45, 46 jusqu'à la mise en tendage de celui-ci entre les deux poulies de renvoi avant 48 et 49.

Cela a pour conséquence que le câble 47 entraîne dans sa course vers l'avant, l'élément de séparation 12 vers une position II correspondant à sa mise en place.

Inversement, lorsque le conducteur cesse d'exercer un poids P sur la crémaillère 40, on obtient la remontée vers le haut de ladite crémaillère 40, sous l'effet d'un organe de rappel élastique 52, entraînant la poulie centrale 41 en sens inverse et, conséquemment, l'enroulement du câble de rappel 50, exerçant une traction sur l'élément de séparation 12, pour provoquer son retour vers une position I correspondant à son escamotage.

## Revendications

1. Dispositif de sécurité pour véhicule à deux roues, notamment du type scooter, comprenant un châssis (2) formé d'une part, d'une tubulure frontale (3) de laquelle est issue une fourche (4) supportant une roue avant (5), reliée à un guidon (6) et d'autre part, d'une tubulure centrale (7) prolongeant la tubulure frontale (3) et s'étendant vers l'arrière par une tubulure (8) supportant un bloc moteur en liaison mécanique avec une roue arrière (9) et un siège (10), ledit châssis (2) étant enveloppé pour tout ou partie par un carénage (11) libérant un espace central (A) délimité par la tubulure frontale (3), la tubulure centrale (7) et la tubulure arrière (8) supportant le siège (10), de manière à permettre au conducteur de prendre place sur le véhicule par accès latéral sans enjambement, ledit espace central (A) étant susceptible d'être occupé au moins partiellement par un élément de séparation escamotable, caractérisé en ce que l'escamotage (I) ou la mise en place (II) de l'élément de séparation (12) s'effectue par l'intermédiaire de moyens de commande (13) actionnables automatiquement par le propre poids (P) du conducteur, de manière à assurer la mise en place dudit élément (12) entre les jambes du conducteur lorsque celui-ci prend place sur le siège (10) et son escamotage lorsqu'il le quitte.

2. Dispositif selon la revendication 1, caractérisé en ce que l'élément de séparation (12) est constitué par une barre droite montée oscillante par une de ses extrémités (12a) sur un axe de rotation (14) solidaire d'une partie supérieure de la tubulure arrière (8) sous le siège (10) et susceptible d'osciller entre une position (I) sensiblement verticale d'escamotage et une position (II) sensiblement horizontale opérationnelle.

3. Dispositif selon la revendication 2, caractérisé en ce que la barre droite (12) constituant l'élément de séparation s'étend à partir d'une génératrice inférieure, par une cloison occupant la quasi totalité de l'espace central (A) pour former un élément de carénage escamotable coopérant en fermeture avec le carénage fixe (11).

4. Dispositif selon l'une des revendications précédentes, caractérisé en ce que les moyens de commande (13) de l'élément de séparation (12) sont actionnables par le propre poids (P) du conducteur par l'intermédiaire d'une platine (15) fixée sous le siège (10) et en liaison (20) avec une biellette (16) à action verticale articulée (21), d'une part, sur une partie fixe (17) de la tubulure arrière (8) du châssis (2) et dont une extrémité libre (16a) est en appui sur un bras de manoeuvre (18) s'étendant librement à partir de l'élément de séparation (12) à proximité de sa zone d'articulation (14) sur le châssis (2) d'autre part, de manière à ce qu'une action verticale sur le siège (10) provoque le débattement angulaire de la biellette (16) autour de son axe fixe (17) selon une valeur prédéterminée et correspondant à un débattement angulaire de l'élément de séparation (12) tel qu'il amène celui-ci dans une position (II) sensiblement horizontale.

5. Dispositif selon la revendication 4, caractérisé en ce que la liaison entre la platine (15) du siège (10) et la biellette (16) est effectuée par l'intermédiaire de deux bras parallèles et verticaux articulés sur deux bras parallèles correspondant de la biellette (16) formant un cadre quadrangulaire avec son axe d'articulation (21) sur le châssis (2) et son extrémité libre (16a) en forme de barre, en appui sur le bras de manoeuvre (18) de l'élément de séparation (12).

6. Dispositif selon la revendication 1, caractérisé en ce que l'élément de séparation (12) est constitué par une barre droite montée coulissante au travers d'un caisson (14) situé sous le siège (10) et renfermant les moyens de commande (13) et susceptible d'entraîner l'élément de séparation (12) selon un déplacement longitudinal et horizontal entre une position (I) d'entrée dite d'escamotage et une position de sortie dite opérationnelle.

7. Dispositif selon la revendication 6, caractérisé en ce que les moyens de commande (13) de l'élément de séparation (12) sont actionnables par le propre poids (P) du conducteur par l'intermédiaire d'une platine (15) disposée sous le siège (10), sur laquelle vient en appui une articulation (16) à partir de laquelle s'étendent deux biellettes (17, 18) formant un premier compas vertical (C1) dont chacune des extrémités libres est reliée pour l'une (17) à une articulation fixe (19) disposée sur les tubulures arrières (8) du châssis (2) sous le siège (10) et pour l'autre (18) à un second compas horizontal (C2) formé également par deux biellettes (20, 21) dont chacune des extrémités libres est reliée pour l'une (20) à une seconde articulation fixe (22) disposée dans l'axe de la première (19) sur la tubulure arrière (8) du châssis (2) et pour l'autre à une articulation mobile (23) reliée à l'une des extrémités de l'élément de séparation (12) à actionner, la liaison entre l'une des bielles (18) du premier compas (Cl) et la bielle correspondante (20) du second compas (C2) étant réalisée par l'intermédiaire d'une articulation mobile (24) ménagée entre l'extrémité de l'une (18) et une patte (25) de l'autre (20) qui est déportée par rapport à son articulation fixe (22), de manière à ce qu'une pression verticale (P) sur le premier compas (C1) provoque l'écartement de ces biellettes (17, 18) et conséquemment l'ouverture de celles (20, 21) constituant le second compas (C2), d'où une extension longitudinale vers une position active de l'élément de séparation (12) disposé à l'extrémité libre dudit second compas (C2).

8. Dispositif selon la revendication 7, caractérisé en ce que l'articulation mobile (24) interposée entre l'extrémité d'une bielle (18) du premier compas (C1) et la patte déportée (25) de la bielle correspondante (20) du second compas (C2) est constituée par un anneau (27) articulé lui-même à l'extrémité libre de la bielle (18) du premier compas (C1) et qui est traversé librement par un pion (28) solidaire de la patte déportée (25) de la bielle (21) du second compas (C2), cette liaison s'effectuant avec un jeu prédéterminé apte à permettre au pion (28) de décrire un arc de cercle dans l'anneau (27), en cours de débattement angulaire dudit second compas (C2).

9. Dispositif selon l'une des revendications 7 ou 8, caractérisé en ce que des moyens de rappel élastiques (29, 30) sont interposés entre la bielle (17) du premier compas vertical (C1) et la paroi arrière d'un caisson récepteur fixe (14) renfermant l'ensemble du dispositif et par rapport auquel une embase correspondante (31) du siège (10) est montée de manière télescopique, pour action sur le premier compas vertical (C1) par l'intermédiaire de la platine (15).

10. Dispositif selon la revendication 9, caractérisé en ce que des moyens de rappel élastiques (32, 33, 34) sont interposés entre une partie inférieure fixe (35) du caisson récepteur (14) et le dessous du siège (10).

11. Dispositif selon la revendication 1 ou 6, caractérisé en ce que les moyens de commande (13) de l'élément de séparation (12) sont actionnables par le propre poids (P) du conducteur, par l'intermédiaire d'une platine (15) disposée sous le siège (10), sur laquelle vient en appui l'extrémité libre d'une crémaillère rectiligne (40) en prise permanente avec un pignon denté (41) disposé solidairement sur un arbre transversal (42) monté rotatif entre deux paliers latéraux (43, 44) et supportant solidairement deux poulies arrière latérales (45, 46), sur lesquelles sont susceptibles de s'enrouler les extrémités d'un câble principal (47) contournant deux poulies fixes de renvoi (48, 49) disposées vers l'avant, lequel câble (47) est relié, d'une part, par son centre avec une extrémité arrière (12a) de l'élément de séparation (12) et, d'autre part, à un second câble (50) dit de rappel, en liaison avec une poulie centrale (51) solidaire de l'arbre (42), de manière à ce que lors d'un actionnement en descente de la crémaillère (40) provoqué par le poids (P) du conducteur, on initie l'enroulement des extrémités du câble principal (47) sur les poulies arrière latérales (45, 46) jusqu'à la mise en tendage de celui-ci entre les deux poulies de renvoi avant (48, 49), entraînant conséquemment dans sa course, l'élément de séparation (12) vers une position (II) correspondant à sa mise en place, ou inversement, lorsque le conducteur cesse d'exercer un poids (P) sur la crémaillère (40), la remontée vers le haut de cette dernière sous l'effet d'un organe de rappel élastique, entraînant la poulie centrale (41) en sens inverse et conséquemment, l'enroulement du câble de rappel (50), exerçant ainsi une traction sur l'élément de séparation (12) pour provoquer son retour vers une position (I) correspondant à son escamotage.

12. Dispositif selon l'une des revendications précédentes, caractérisé en ce que l'élément de séparation (12) comporte des moyens de verrouillage en position (non représentés).

13. Véhicule à deux roues, notamment du type scooter, caractérisé en ce qu'il comporte un dispositif de sécurité selon l'une des revendications 1 à 12.
